# EUROPEAN PATENT APPLICATION

(11) **EP 2 851 554 A1**
(43) Date of publication of application: **25.03.2015**
(21) Application number: 13184993.7
(22) Date of filing: 18.09.2013
(51) Int. Cl.: F03D 1/06

(54) **Arrangement to reduce noise emission**

(71) Applicant: Siemens Aktiengesellschaft, 80333 München (DE)
(72) Inventor: Enevoldsen, Peder Bay, 7100 Vejle (DK); Oerlemans, Stefan, 7400 Herning (DK)

(57) **Abstract**

The invention relates to an arrangement (10) to reduce noise emission, which is generated by a wind turbine rotor blade (11). The arrangement (10) comprises the wind turbine rotor blade (11) and a noise reduction means (20), the noise reduction means (20) being attached to the wind turbine rotor blade (11). The wind turbine rotor blade (11) comprises a rotor blade suction side (14), a rotor blade pressure side (15), a rotor blade leading edge section (12) and a rotor blade trailing edge section (13) with a rotor blade trailing edge (35). The noise reduction means (20) comprises an inner surface (23), which is facing the rotor blade trailing edge section (13), and an outer surface (24), which is opposite to the inner surface (23). The noise reduction means (20) comprises a leading edge (27) and a trailing edge (28), both connecting the inner surface (23) and the outer surface (24). The noise reduction means (20) is connected at the rotor blade trailing edge section (13) by a connection means (22). Thus, the inner surface (23) shows a pre-defined distance (21) to at least one side of the wind turbine rotor blade (11). Finally, the pre-defined distance (21) is chosen in a way that acoustic waves (31), which are generated at the rotor blade trailing edge section (13), are reflected by the inner surface (23) such that noise emission, which is generated by the wind turbine rotor blade (11), is reduced.

## Description

The present invention relates to an arrangement to reduce noise emission, the noise emission being generated by a wind turbine rotor blade. In particular, the arrangement comprises a noise reduction means, which is connected to the wind turbine rotor blade at a rotor blade trailing edge section of the wind turbine rotor blade. Furthermore, the invention relates to a method of manufacturing such an arrangement.

### BACKGROUND OF THE INVENTION

Realization of a low noise emission level is a critical and highly important design parameter in the development of wind turbine rotor blades and wind turbines. This is due to the fact that the noise emission level of a wind turbine sets a limitation on if a wind turbine is allowed to be built and how close in the proximity of residential areas the wind turbine is allowed to be built. Thus, the noise emission level may set a limitation to a rotational frequency of a rotor of the wind turbine because of the above mentioned restrictions. Furthermore, also the rotor diameter may be limited by noise constraints.

Noise emission, which is generated by rotating wind turbine rotor blades, represents a significant share of the total noise emission, which is generated by the wind turbine under operation. Consequently, a significant effort has been made to develop solutions which mitigate and reduce noise generated by wind turbine rotor blades. It has been disclosed in the European patent application EP 2 309 119 Al that serrated panels attached to or integrated with a wind turbine rotor blade may have a beneficial effect on the noise emission level to a certain extent.

However, there exists an urgent need to provide an improved means to reduce noise emission, generated by a wind turbine rotor blade. In particular, the means should be capable to both substitute and complement existing noise emission means for wind turbine rotor blades.

### SUMMARY OF THE INVENTION

This objective is achieved by the independent claims. The dependent claims describe advantageous developments and modifications of the invention.

In accordance with the invention there is provided an arrangement to reduce noise emission, which is generated by a wind turbine rotor blade. The arrangement comprises the wind turbine rotor blade and a noise reduction means, the noise reduction means being attached to the wind turbine rotor blade. The wind turbine rotor blade comprises a rotor blade suction side, a rotor blade pressure side, a rotor blade leading edge section and a rotor blade trailing edge section with a rotor blade trailing edge. The noise reduction means comprises an inner surface, which is facing the rotor blade trailing edge section, and an outer surface, which is opposite to the inner surface. The noise reduction means comprises a leading edge and a trailing edge, both connecting the inner surface and the outer surface. The noise reduction means is connected at the rotor blade trailing edge section by a connection means. Thus, the inner surface shows a pre-defined distance to at least one side of the wind turbine rotor blade. Finally, the pre-defined distance is chosen in a way that acoustic waves, which are generated at the rotor blade trailing edge section, are reflected by the inner surface such that noise emission, which is generated by the wind turbine rotor blade, is reduced.

The wind turbine rotor blade is arranged and prepared for being a part of a wind turbine. A wind turbine is a device that can convert wind energy, i. e. kinetic energy from wind, into mechanical energy. Advantageously, the mechanical energy is subsequently used to generate electricity. A wind turbine is also referred to as a wind power plant or a wind charger. Furthermore, a wind turbine may also be referred to as a wind turbine engine.

The rotor blade trailing edge has to be understood as an edge or a rim, which is located at the periphery of the rotor blade trailing edge section. The rotor blade trailing edge section is a region or an area of the wind turbine rotor blade, which comprises the rotor blade trailing edge and the adjacent region. Exemplarily, the rotor blade trailing edge section may cover an area of 20 per cent, in particular 10 per cent, with regard to an area of the whole wind turbine rotor blade. Likewise, the rotor blade leading edge section also has to be understood as an area or a region around the rotor blade leading edge.

The noise reduction means may be substantially parallel to at least one side of the wind turbine rotor blade. However, it may also be inclined to at least one side of the wind turbine rotor blade. Thus, it is important that the distance between the noise reduction means and the wind turbine rotor blade stays constant or mechanically stable, which is meant by the notion "pre-defined".

Noise, which is mitigated and reduced by the above described noise reduction means, may in principal originate or be generated at any region of the wind turbine rotor blade. In particular, however, acoustic waves, which cause the noise, are generated at the rotor blade trailing edge section. Even more particularly, the acoustic waves are generated at the rotor blade trailing edge.

The pre-defined distance and thus the location of the noise reduction means with regard to the wind turbine rotor blade may be chosen to be inside a boundary layer of the wind turbine rotor blade or to be outside the boundary layer.

The boundary layer is a region close to a surface of the wind turbine rotor blade, where a mean flow speed of wind is smaller than outside of the region. The boundary layer can be both laminar and turbulent. Advantageously, the boundary layer starts laminarly at the rotor blade leading edge section, and then transitions into a turbulent boundary layer. The transition may, for instance, after the first third of the chord between the rotor blade leading edge section and the rotor blade trailing edge. Advantageously, at the rotor blade leading edge section the thickness of the boundary layer is in a range of a few millimeters, while at the rotor blade trailing edge section it is in a range of a few centimeters. If the wind flow separates from the surface of the wind turbine rotor blade, this is denoted as stall.

An advantage of locating the noise reduction means inside the boundary layer is that drag is lower and that possible self-noise from the noise reduction means is reduced due to a reduced mean flow speed.

An advantage of locating the noise reduction shield outside of the boundary layer is that the complete boundary layer is shielded and that possible self-noise from the noise reduction means is reduced due to lower turbulence outside the boundary layer.

A general advantage of the noise reduction means is that the noise reduction means may function as an additional airfoil at low wind speeds when the boundary layer is thin. This is due to the fact that the noise reduction means extends outside the boundary layer where the noise reduction means is aerodynamically active. Thus, a higher power generated by the wind turbine under operation is possible at low wind speeds compared to a wind turbine rotor blade without a noise reduction means.

The noise reduction means may comprise polyurethane and/or three dimensional printed plastic.

In an advantageous embodiment, the wind turbine rotor blade comprises a tip end, a root and a shoulder. Furthermore, the rotor blade trailing edge section extends between the shoulder and the tip end, and the rotor blade trailing edge section is divided into an inner half adjacent to the shoulder and an outer half adjacent to the tip end. Advantageously, the noise reduction means is located in the outer half.

At the root, the wind turbine rotor blade is advantageously attached to a hub of the wind turbine. The tip end is characterized as a part of the wind turbine rotor blade which is most distant from the root.

The shoulder is adjacent to the rotor blade trailing edge section. In particular, the chord of the wind turbine rotor blade is greatest or longest where the shoulder is located.

The notion of the inner half and the outer half has to be understood such that 50 per cent of the rotor blade trailing edge section is located in the inner half and that 50 per cent of the rotor blade trailing edge section is located in the outer half. In other words, the rotor blade trailing edge section is virtually cut into two equal parts by the inner half and the outer half.

In an alternative embodiment, the rotor blade trailing edge section is divided into three equal parts, namely an inner third, an intermediate third and an outer third. The inner third is adjacent to the shoulder, the outer third is adjacent to the tip end and the intermediate third is located in between the inner third and the outer third. Advantageously, the noise reduction means is located in the outer third.

A reason why the noise reduction means is beneficially located in the outer half or in the outer third is that rotational speeds of the wind turbine rotor blade are highest towards the tip end. Consequently, noise emission may also be highest towards the tip end. Thus, it is advantageous to place the noise reduction means towards the tip end.

In another advantageous embodiment, in a plane, which is perpendicular to the rotor blade trailing edge, a first line extends from the rotor blade trailing edge to a first point of the inner surface. The first point is closest to the rotor blade leading edge section. Likewise, in this plane, a second line extends from the rotor blade trailing edge to a second point of the inner surface. The second point is furthermost to the rotor blade leading edge section. It is beneficial that the noise reduction means is connected with the rotor blade trailing edge section in a way that an angle, which is between the first line and the second line, is greater than 70 degree, in particular greater than 100 degree.

In other words, it is advantageous to place or to arrange the noise reduction means with regard to the rotor blade trailing edge such that a sufficiently large angular region is covered by the noise reduction means. Consequently, acoustic waves, which are generated at the rotor blade trailing section, in particular at the rotor blade trailing edge, are reflected by the inner surface. The angular region has to be understood as being centered at the trailing edge.

In another advantageous embodiment, in the plane, which is perpendicular to the rotor blade trailing edge, a third line can be drawn from the rotor blade trailing edge to the inner surface, wherein the third line is substantially perpendicular to the surface of the rotor blade trailing edge section which is facing the inner surface.

Then, in a first alternative, the first point and the second point lie on different sides with regard to an intersection of the third line and the inner surface. Descriptively spoken, the first point, thus the leading edge lies "before" the rotor blade trailing edge and the second point, thus the trailing edge, lies "behind" the rotor blade trailing edge. An advantage of this alternative is a possibly large angular region which is covered by the noise reduction means, which means that the acoustic waves may be reflected to a large extent.

In a second alternative, both the first point, thus the leading edge, and the second point, thus the trailing edge, are located "before" the rotor blade trailing edge. This arrangement of the noise reduction means with regard to the wind turbine rotor blade may be sufficient, since most of the acoustic waves may be radiated in an upstream direction, i. e. towards the rotor blade leading edge section.

In general, it is advantageous that the position of the noise reduction means with regard to the wind turbine rotor blade and in particular the angle between the first line and the second line are chosen such that they are aligned with a local flow direction of the wind.

In another advantageous embodiment, the noise reduction means comprises a tip side, which is facing the tip end of the wind turbine rotor blade, and a root side, which is facing the root of the wind turbine rotor blade. Additionally, the noise reduction means is continuously connected via the tip side and/or via the root side with the rotor blade trailing edge section.

In other words, the noise reduction means may be designed in a way that it is gradually transient into the existing rotor blade trailing edge section. Thus, end sections of the noise reduction means, where noise can develop or escape, are avoided. Additionally or alternatively, noise can be reduced by replacing the spanwise edge of the noise reduction means by porous metal foam, for instance retimet or recemat. Hereby, a tip vortex is diffused, which has been shown to effectively mitigate or even eliminate edge noise.

In another advantageous embodiment, the inner surface and/or the surface of the rotor blade trailing edge section which is facing the inner surface comprises acoustic absorption material such that the acoustic waves are at least partly absorbed.

In other words, the inner surface and/or the surface of the rotor blade trailing edge section which is facing the inner surface are treated by an absorption material in order to enhance absorption of the acoustic waves at the treated surfaces. On the one hand, the acoustic waves, which are generated at the rotor blade trailing edge section, may directly be absorbed, at least partly, by the treated surfaces. On the other hand, the acoustic waves may first be reflected and subsequently be, at least partly, absorbed by the treated surfaces.

The acoustic absorption material may comprise perforate and/or mesh facing sheets. For example, the performated sheets may comprise punched aluminium, mechanically drilled carbon fibre composites, laser drilling or microperforates. As bulk material, also felt fibres, ceramic foam, ceramic fibre or metal casing ceramic hollow spheres are advantageous.

In particular, the acoustic absorption material may come as a single layer or as a double layer. They are also referred to as acoustic liners.

In another advantageous embodiment, the inner surface is substantially parallel to the surface of the rotor blade trailing edge section which is facing the inner surface.

An advantage of parallel surfaces is ease of manufacturing.

In another advantageous embodiment, the trailing edge comprises serrations, and/or the leading edge comprises serrations, and/or the rotor blade trailing edge section comprises serrations. In particular, the serrations are periodic serrations.

Serrated rotor blade trailing edge sections are known for noise reduction purposes as disclosed for instance in the European patent application EP 0 652 367 A1. Furthermore, it is known that serrated rotor blade trailing edge sections may improve wind turbine rotor efficiency as disclosed for example in the European patent EP 1 314 885 B1. It is therefore beneficial to also use serrations for the trailing edge and the leading edge of the noise reduction means, and alternatively combine these serrations with a serrated rotor blade trailing edge section. In other words, it is possible that the noise reduction means is added to an existing serrated rotor blade trailing edge section which has been, amongst other reasons, being serrated already for noise reduction purposes. Also is it possible to substitute a serrated rotor blade trailing edge section by the noise reduction means.

Thus, the rotor blade trailing edge section where the noise reduction means is attached to can be plane or serrated.

In another advantageous embodiment, the connection means is attached to a support structure. The support structure, which in particular comprises a shape of a plate, is attached to the rotor blade trailing edge section.

An advantage of the support structure is that the noise reduction means can easily and efficiently be manufactured separately from the wind turbine rotor blade and can subsequently be attached to the wind turbine rotor blade.

In another advantageous embodiment, the arrangement comprises a first noise reduction means, which is connected with the rotor blade suction side, and/or a second noise reduction shield, which is connected with the rotor blade pressure side.

It may be the case that for a wind turbine rotor blade under operation noise, noise emission at the rotor blade suction side is more significant compared to noise radiation at the rotor blade pressure side. Then it is beneficial that at least the first noise reduction means (at the suction side) is installed; the second noise reduction means is optional.

Furthermore, the invention relates to a method of manufacturing such an arrangement to reduce noise emission.

The method advantageously comprises the following steps:
a) casting the wind turbine rotor blade,
b) attaching a pre-fabricated noise reduction means to the
wind turbine rotor blade as a retrofit and/or during manufacturing of the arrangement.

If the noise reduction means is attached to the wind turbine rotor blade during manufacturing, it is advantageous that the noise reduction means is an integral part of the wind turbine rotor blade with which it is cased together.

The aspects defined above and further aspects of the present invention are apparent from the examples of embodiments to be described hereinafter and are explained with reference to the examples of embodiment.

### BRIEF DESCRIPTION OF THE DRAWINGS

Embodiments of the invention are now described, by way of example only, with reference to the accompanying drawings, of which:
- Figure 1: shows an arrangement to reduce noise emission, comprising a wind turbine rotor blade and a noise reduction means,
- Figure 2: shows a part of such an arrangement in a perspective view,
- Figure 3: shows acoustic waves, originating from a rotor blade trailing edge of a wind turbine rotor blade,
- Figure 4: shows an angular region covered by a noise reduction means and a pre-defined distance of an inner surface of the noise reduction means with regard to one side of a wind turbine rotor blade,
- Figure 5: shows a first noise reduction means and a second noise reduction means inside a boundary layer,
- Figure 6: shows a noise reduction means with a closed tip side and a closed root side,
- Figure 7: shows a noise reduction means with a closed root side in a first view,
- Figure 8: shows the noise reduction means with a closed root side in a second view,
- Figure 9: shows a first embodiment of a serrated noise reduction means,
- Figure 10: shows a second embodiment of a serrated noise reduction means and
- Figure 11: shows a third embodiment of a serrated noise reduction means.

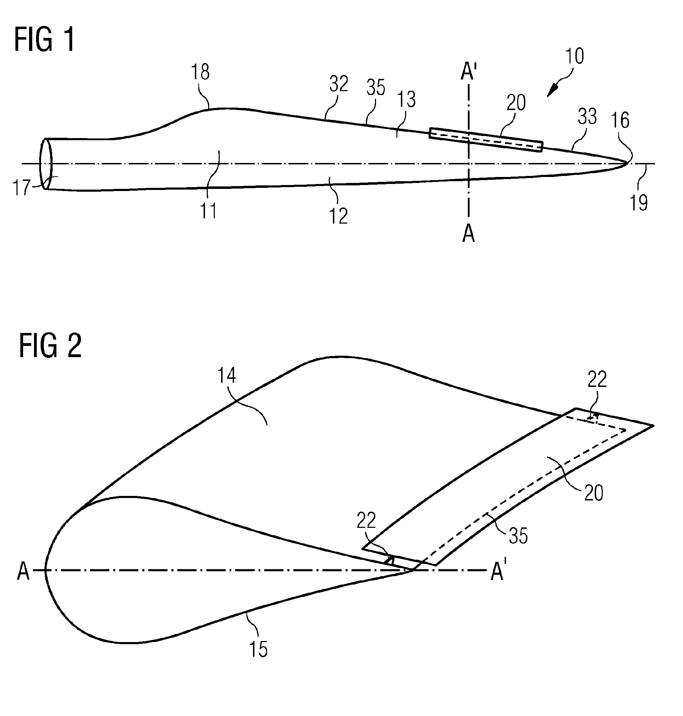

Figure 1 shows an arrangement 10 to reduce noise emission, which is generated by a wind turbine rotor blade 11. The arrangement 10 comprises a wind turbine rotor blade 11 and a noise reduction means 20. The wind turbine rotor blade 11 comprises a root 17 and a tip end 16. The root 17 and the tip end 16 are virtually connected by a rotor blade longitudinal axis 19. Furthermore, the wind turbine rotor blade 11 comprises a rotor blade leading edge section 12 and rotor blade trailing edge section 13. The rotor blade trailing edge section 13 comprises a rotor blade trailing edge 35. The rotor blade trailing edge 35 has to be understood as an edge or a rim or a line, while the rotor blade trailing edge section 13 and the rotor blade leading edge section 12 each has to be understood as a section or a region or an area of the wind turbine rotor blade 11. The rotor blade trailing edge 35 extends from a shoulder 18 of the wind turbine rotor blade 11 to the tip end 16. The rotor blade trailing edge section 13 is additionally divided into an inner half 32, which is adjacent to the shoulder 18, and an outer half 33, which is adjacent to the tip end 16. Thus, 50 per cent of the rotor blade trailing edge section 13 comprises the inner half 32 and 50 per cent of the rotor blade trailing edge section 13 comprises the outer half 33. In the concrete example of the invention shown in Figure 1, the noise reduction means 20 is attached to the rotor blade trailing edge section 13 in the outer half 33 of the rotor blade trailing edge section 13.

Figure 2 shows a part of the arrangement 10 shown in Figure 1 in a perspective view. Moreover, the arrangement 10 of Figure 1 is shown in Figure 2 along the cut A to A'. In this view, a rotor blade suction side 14 and a rotor blade pressure side 15 of the wind turbine rotor blade 11 become apparent. In Figure 2 the noise reduction means 20 substantially comprises a shape of a plate and comprises two connection means 22.

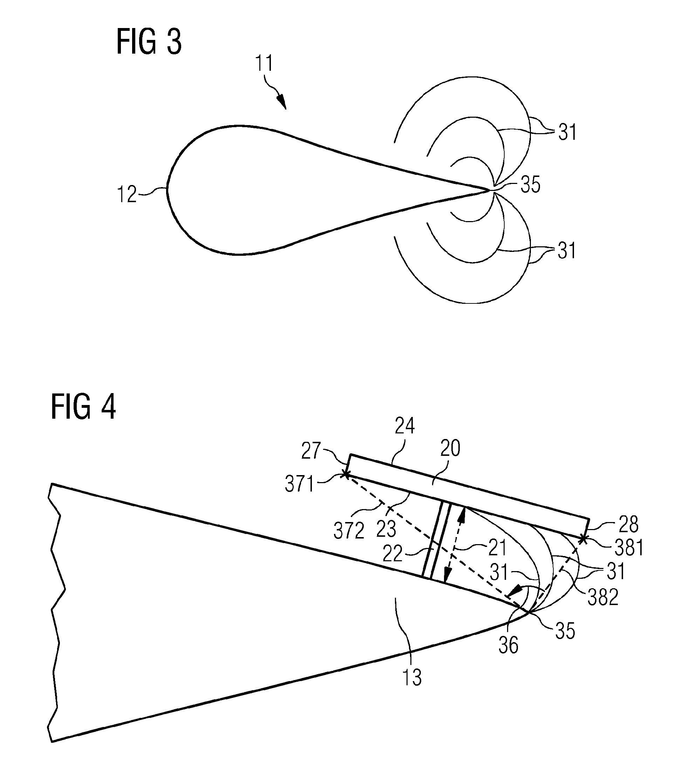

In Figure 3, again a wind turbine rotor blade 11 with a rotor blade leading edge section 12 and a rotor blade trailing edge 35 is shown. Furthermore, it can be seen that acoustic waves 31 are generated or originate at the rotor blade trailing edge 35.

In Figure 4, a rotor blade trailing edge section 13 and a noise reduction means 20, which is attached or connected to the rotor blade trailing edge section 13 by a connection means 22 is shown. The noise reduction means 20 comprises an inner surface 23 which is facing a surface of the rotor blade trailing edge section 13. Furthermore, the noise reduction means 20 comprises an outer surface 24, which is opposite to the inner surface 23. Additionally, the noise reduction means 20 comprises a leading edge 27, which is facing a rotor blade leading edge section 12 of the wind turbine rotor blade 11. Furthermore, the noise reduction means 20 comprises a trailing edge 28, which is opposite to the leading edge 27.

As the noise reduction means 20 is connected to the rotor blade trailing edge section 13 in a mechanically stable way, the inner surface 23 features a pre-defined distance 21 to the surface of the rotor blade trailing edge section 13. In the example shown in Figure 4, the inner surface 23 is substantially parallel to the surface of the rotor blade trailing edge section 13, which the inner surface 23 is facing. However, in an alternative embodiment, the noise reduction means 20, i.e. its inner surface 23, can also be inclined with regard to the facing surface of the rotor blade trailing edge section 13.

An important aspect of the invention is that the pre-defined distance 21 between the inner surface 23 and the rotor blade trailing edge section 13 is chosen in a way that acoustic waves 31, which are generated at the rotor blade trailing edge section 13, in particular at a rotor blade trailing edge 35 of the rotor blade trailing edge section 13, are reflected by the inner surface 23. A benefit of this is that noise emission, which is generated by the wind turbine rotor blade 11, is mitigated and reduced.

An important design parameter of the inventive arrangement 10 is the angular region, which is covered by the noise reduction means 20 and which is centered at the rotor blade trailing edge 35. This angular region is defined as follows:

A first point 371 and a second point 381 are assigned to the inner surface 23. The first point 371 is defined as a point which, in a plane perpendicular to the rotor blade trailing edge 35, is closest to the rotor blade leading edge section 12. The second point 381 is most distant to the rotor blade leading edge section 12. Then, a first line 372 extends from the rotor blade trailing edge 35 to the first point 371. Likewise, a second line 382 extends from the rotor blade trailing edge 35 to the second point 381. Given this definitions, an angle 36 between the first line 372 and the second line 382 can be determined, wherein the angle 36 is centered at the intersection of the first line 372 and the second line 382, i. e. the rotor blade trailing edge 35. In the advantageous embodiment shown in Figure 4 the angle 36 is 95 degree.

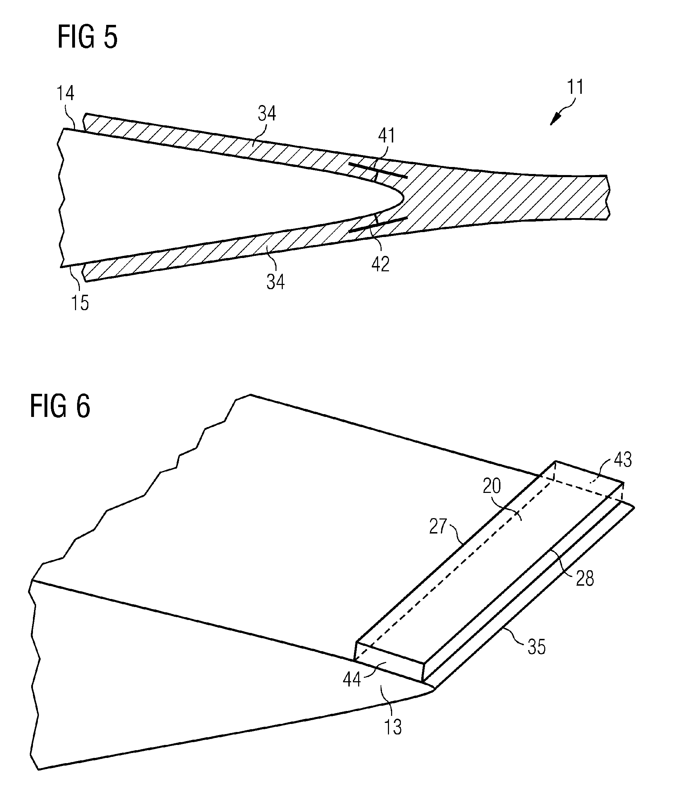

In Figure 5, a wind turbine rotor blade 11 with a rotor blade suction side 14 and a rotor blade pressure side 15 is shown. Additionally, a boundary layer 34 of the wind turbine rotor blade 11 is shown. The boundary layer 34 can be understood as a region close to the surfaces of the wind turbine rotor blade 11, where a mean flow speed of wind is considerably smaller than in an outer region, which is further away from the surfaces of the wind turbine rotor blade 11. Note that the boundary layer 34 of the suction side 14 and the boundary layer 34 of the pressure side 15 merge at the rotor blade trailing edge and continue downstream. The boundary layer thickness at the suction side 14 and at the pressure side 15 slightly increases downstream.

It is advantageous to arrange the noise reduction means 20 inside the boundary layer 34. Additionally, it is advantageous to arrange a first noise reduction means 41 in connection with the rotor blade suction side 14 and a second noise reduction means 42 in connection with the pressure side 15.

Figure 6 shows a rotor blade trailing edge section 13 with a rotor blade trailing edge 35. Furthermore, it shows a noise reduction means 20 with a leading edge 27, a trailing edge 28, a tip side 43 and a root side 44. The tip side 43 is defined as facing the tip end 16 of the wind turbine rotor blade 11 and the root side 44 is defined as facing a root 17 of the wind turbine rotor blade 11.

In the advantageous embodiment shown in Figure 6 it can be seen that the noise reduction means 20 is closed at the tip side 43 and the root side 44. An advantage of this arrangement is that edge noise can be mitigated efficiently and considerably. Note that the noise reduction means 20 is however open at the leading edge 27 and the trailing edge 28. This is important as the wind shall be able to flow between the noise reduction means 20 and the rotor blade trailing edge section 13 of the wind turbine rotor blade 11.

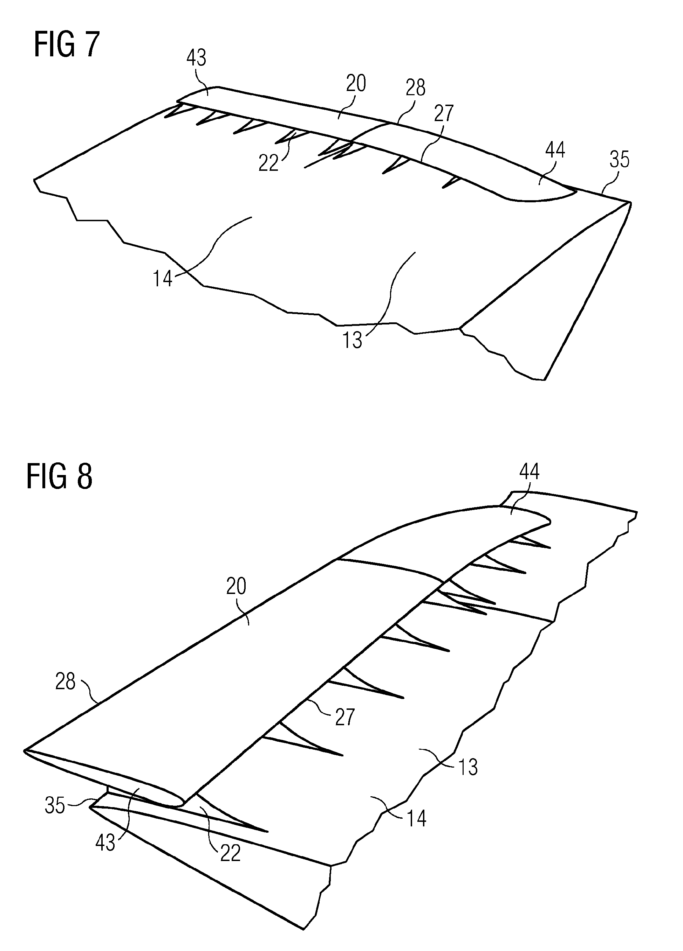

Figure 7 and Figure 8 show a rotor blade trailing edge section 13 of a wind turbine rotor blade from two different perspectives. In particular, a rotor blade suction side 14 of the wind turbine rotor blade is shown. A noise reduction means 20 is attached to the rotor blade trailing edge section 13 via a plurality of connection means 22. A leading edge 27, which is facing to the rotor blade leading edge, a trailing edge 28, which is opposite to the leading edge 27, a tip side 43, which is facing to the tip of the wind turbine rotor blade, and a root side 44, which is facing to the root of the wind turbine rotor blade, can be attributed to the noise reduction means 20.

The specific feature that shall be illustrated in Figures 7 and 8 is the transient root side 44. In other words, the noise reduction means 20 is continuously connected with the trailing edge section 13 at the root side 44.

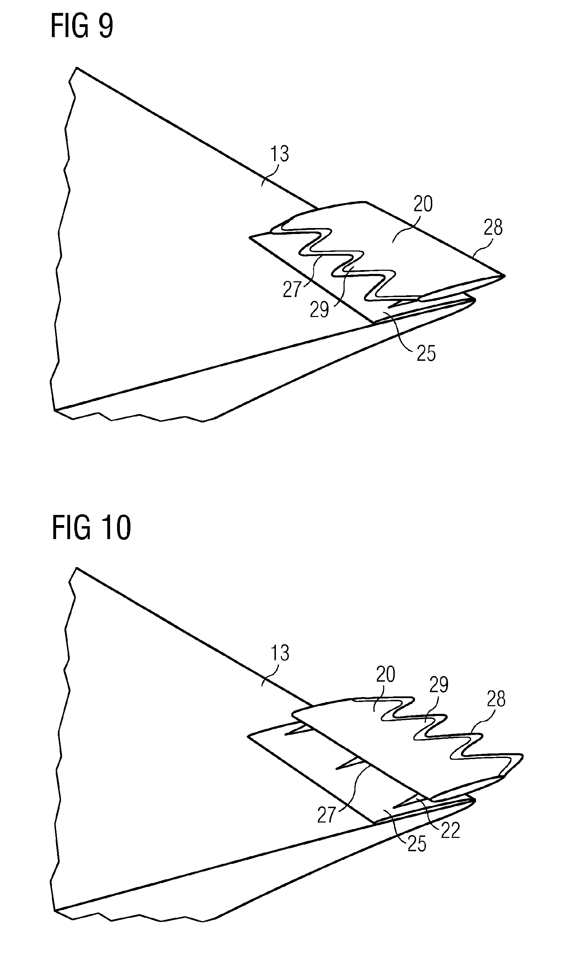

Figure 9, Figure 10 and Figure 11 show advantageous embodiments of serrated noise reduction means 20. In each of the Figures the noise reduction means 20 is mounted on a support structure 25, which comprises a shape of a plate. An advantage of the support structure 25 is a better mechanical stability and ease of manufacturing. Concretely, instead of mounting or attaching the pre-fabricated noise reduction means 20 directly to the rotor blade trailing section 13, which might be tricky and difficult in practice, the noise reduction means 20 can be attached by connection means 22 to the support structure 25 beforehand, i.e. separately, and subsequently the support structure 25 with the noise reduction means 20 can directly be connected or attached to the wind turbine rotor blade trailing edge section 13. If the support structure 25 has for instance the shape of a plate as shown in the Figures 9 to 11, attaching the support structure 25 to the rotor blade trailing edge section 13 is easy to perform.

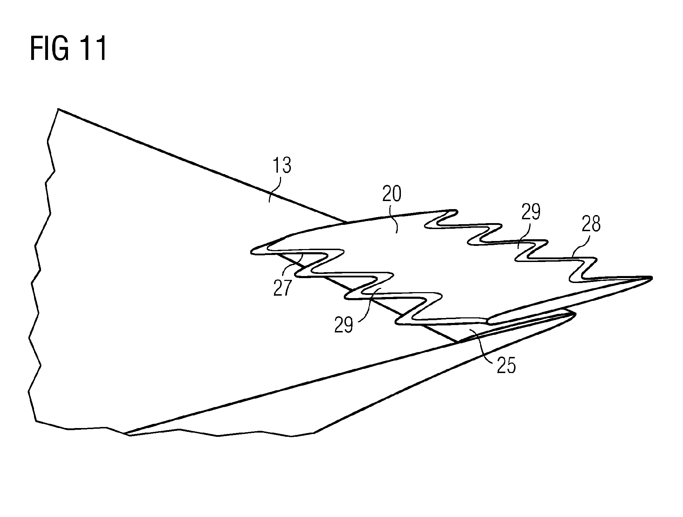

In Figure 9, the noise reduction means 20 comprises serrations 29 at a leading edge 27 of the noise reduction means 20. In Figure 10, the noise reduction means 20 comprises serrations at a trailing edge 28 of the noise reduction means 20. In Figure 11, the noise reduction means 20 comprises serrations at both the leading edge 27 and the trailing edge 28. The serrations 29 may have a random shape or profile. However, it is advantageous that the serrations 29 comprise a substantially periodic structure.

## Claims

1. Arrangement (10) to reduce noise emission, which is generated by a wind turbine rotor blade (11),
wherein
- the arrangement (10) comprises the wind turbine rotor blade (11) and a noise reduction means (20), the noise reduction means (20) being attached to the wind turbine rotor blade (11) ;
- the wind turbine rotor blade (11) comprises a rotor blade suction side (14), a rotor blade pressure side (15), a rotor blade leading edge section (12) and a rotor blade trailing edge section (13) with a rotor blade trailing edge (35);
- the noise reduction means (20) comprises an inner surface (23), which is facing the rotor blade trailing edge section (13), and an outer surface (24), which is opposite to the inner surface (23);
- the noise reduction means (20) comprises a leading edge (27) and a trailing edge (28), both connecting the inner surface (23) and the outer surface (24);
- the noise reduction means (20) is connected at the rotor blade trailing edge section (13) by a connection means (22), thus the inner surface (23) showing a pre-defined distance (21) to at least one side of the wind turbine rotor blade (11); and
- the pre-defined distance (21) is chosen in a way that acoustic waves (31), which are generated at the rotor blade trailing edge section (13), are reflected by the inner surface (23) such that noise emission, which is generated by the wind turbine rotor blade (11), is reduced.

2. Arrangement (10) according to claim 1,
wherein
- the wind turbine rotor blade (11) comprises a tip end (16), a root (17) and a shoulder (18),
- the rotor blade trailing edge section (13) extends between the shoulder (18) and the tip end (16),
- the rotor blade trailing edge section (13) is divided into an inner half (32) adjacent to the shoulder (18) and an outer half (33) adjacent to the tip end (16), and
- the noise reduction means (20) is located in the outer half (33).

3. Arrangement (10) according to one of the preceding claims, wherein
- in a plane, which is perpendicular to the rotor blade trailing edge (35), a first line (372) extends from the rotor blade trailing edge (35) to a first point (371) of the inner surface (23), while the first point (371) is closest to the rotor blade leading edge section (12),
- in the plane, which is perpendicular to the rotor blade trailing edge (35), a second line (382) extends from the rotor blade trailing edge (35) to a second point (381) of the inner surface (23), while the second point (381) is furthermost to the rotor blade leading edge section (12), and
- the noise reduction means (20) is connected with the rotor blade trailing edge section (13) in a way that an angle (36), which is between the first line (372) and the second line (382), is greater than 70 degree, in particular greater than 100 degree.

4. Arrangement (10) according to one of the preceding claims, wherein
- the noise reduction means (20) comprises a tip side (43), which is facing the tip end (16) of the wind turbine rotor blade (11), and a root side (44), which is facing the root (17) of the wind turbine rotor blade (11), and
- the noise reduction means (20) is continuously connected via the tip side (43) and/or via the root side (44) with the rotor blade trailing edge section (13).

5. Arrangement (10) according to one of the preceding claims, wherein the inner surface (23) and/or the surface of the rotor blade trailing edge section (13) which is facing the inner surface (23) comprises acoustic absorption material such that the acoustic waves (31) are at least partly absorbed.

6. Arrangement (10) according to one of the preceding claims, wherein the inner surface (23) is substantially parallel to the surface of the rotor blade trailing edge section (13) which is facing the inner surface (23).

7. Arrangement (10) according to one of the preceding claims,
- wherein the trailing edge (28) comprises serrations (29), and/or
- wherein the leading edge (27) comprises serrations (29), and/or
- wherein the rotor blade trailing edge section (13) comprises serrations (29), and
- wherein the serrations (29) are in particular substantially periodic serrations.

8. Arrangement (10) according to one of the preceding claims, wherein
- the connection means (22) is attached to a support structure (25), and
- the support structure (25), in particular comprising a shape of a plate, is attached to the rotor blade trailing edge section (13).

9. Arrangement (10) according to one of the preceding claims, wherein the arrangement (10) comprises
- a first noise reduction means (41), which is connected with the rotor blade suction side (14), and/or
- a second noise reduction means (42), which is connected with the rotor blade pressure side (15).

10. Method of manufacturing an arrangement (10) to reduce noise emission according to one of the preceding claims.

11. Method according to claim 10,
wherein the method comprises the following steps:
a) casting the wind turbine rotor blade (11),
b) attaching a prefabricated noise reduction means (20) to the wind turbine rotor blade (11) as a retrofit and/or during manufacturing of the arrangement (10).
